# EUROPÄISCHE PATENTSCHRIFT

(11) **EP 3 463 992 B1**
(45) Veröffentlichungstag und Bekanntmachung des Hinweises auf die Patenterteilung: **07.07.2021**
(21) Anmeldenummer: 17726632.7
(22) Anmeldetag: 31.05.2017
(51) Int. Cl.: B60R 22/38, B60R 22/405

(54) **GURTAUFROLLER FÜR EINEN FAHRZEUG-SICHERHEITSGURT**
WEBBING RETRACTOR FOR VEHICLE SEAT BELTS
RÉTRACTEUR POUR CEINTURES DE SÉCURITÉ DE VÉHICULES AUTOMOBILES

(30) Priorität: 06.06.2016 DE 102016006750
(43) Veröffentlichungstag der Anmeldung: 10.04.2019
(73) Patentinhaber: ZF Automotive Germany GmbH, 73553 Alfdorf (DE)
(72) Erfinder: HIRSCH, Johann, 73553 Alfdorf (DE); RINK, Jürgen, 73550 Waldstetten (DE); LITTAU, Friedrich, 73553 Rienharz (DE)
(74) Vertreter: ZF Patentabteilung - DIPS
(86) Internationale Anmeldenummer: PCT/EP2017/063078
(87) Internationale Veröffentlichungsnummer: WO 2017/211624

(56) Entgegenhaltungen:
- EP-A2- 1 992 531
- WO-A1-2014/040748
- CN-U- 202 089 022
- DE-A1- 2 318 957
- DE-A1- 3 636 073
- US-A- 3 248 069

## Beschreibung

Die Erfindung betrifft einen Gurtaufroller für ein Fahrzeug-Sicherheitsgurtsystem gemäß dem Oberbegriff des Anspruchs 1.

Ein derartiger Gurtaufroller ist beispielsweise aus der US 3 248 069 A bekannt.

Auf der Gurtspule ist ein Sicherheitsgurt aufgenommen, mit dem sich ein Fahrzeuginsasse anschnallen kann. Im Normalzustand ist die Gurtspule frei gegen die Wirkung einer Rückholfeder in einer Gurtbandabzugsrichtung drehbar. Somit kann der Fahrzeuginsasse den Sicherheitsgurt abziehen, beispielsweise um sich anzuschnallen oder im angeschnallten Zustand nach vorne zu lehnen. Wenn der Sicherheitsgurt freigegeben wird, beispielsweise wenn sich der Fahrzeuginsasse abschnallt oder wieder nach hinten lehnt, wird er von unter der Wirkung der Rückholfeder wieder auf der Gurtspule aufwickelt.

Es ist allgemein bekannt, dass die Gurtspule eines solchen Gurtaufrollers auf zwei verschiedene Arten blockiert werden kann: fahrzeugsensitiv und gurtbandsensitiv. Eine fahrzeugsensitive Blockierung wird abhängig von Parametern ausgelöst, die das Fahrzeug betreffen, beispielsweise die Verzögerung des Fahrzeugt. Eine gurtbandsensitive Blockierung wird abhängig von Parametern ausgelöst, die das Gurtband bzw. den Sicherheitsgurt betreffen, beispielsweise die Beschleunigung, mit der das Gurtband vom Gurtaufroller abgezogen wird.

Wenn das Fahrzeug, in dem der Gurtaufroller angeordnet ist, entsprechend stark verzögert und/oder das Gurtband mit der entsprechenden Beschleunigung vom Gurtaufroller abgezogen wird, wird die Blockierung der Gurtspule ausgelöst. In diesem Zustand kann (fast) kein Gurtband mehr abgezogen werden. Der begrenzte Abzug von Gurtband, der aufgrund des Filmspuleneffekts oder aufgrund eines eventuell vorhandenen Gurtkraftbegrenzers möglich ist, wird hierbei vernachlässigt.

Im Rahmen der Erfindung wird lediglich die gurtbandsensitive Blockierung betrachtet. Diese wird mittels der Trägheitsklinke ausgelöst. Die Trägheitsklinke ist an der Gurtspule oder einem mit dieser verbundenen Bauteil angebracht, so dass sie sich zusammen mit der Gurtspule dreht. Dabei ist die Trägheitsklinke in ihrem Massenschwerpunkt schwenkbar gelagert, und sie wird von einer Rückstellfeder in die Ausgangsstellung beaufschlagt.

Die Trägheitsklinke ist innerhalb einer Sperrverzahnung angeordnet, die die Trägheitsklinke ringförmig umgibt und Teil eines Sperrrings ist, der relativ zum Rahmen aus einer Ausgangsstellung in eine Blockierstellung verdreht werden kann. Wenn der Sperrring in die Blockierstellung verdreht wird, wird die Gurtspule blockiert.

In ihrer Ausgangsstellung kann die Trägheitsklinke innerhalb der Sperrverzahnung frei gedreht werden, so dass auch die Gurtspule frei gedreht werden kann.

Wenn das Gurtband mit steigender Geschwindigkeit von der Gurtspule abgezogen wird, führt dies zu einer Drehbeschleunigung der Gurtspule. Solange die Drehbeschleunigung unterhalb einer Auslöseschwelle der gurtbandsensitiven Blockierung liegt, verbleibt die Trägheitsklinke aufgrund der Wirkung der Rückstellfeder in ihrer Ausgangsstellung.

Wenn die Drehbeschleunigung die Auslöseschwelle überschreitet, führt dies dazu, dass sich die Trägheitsklinke aufgrund ihrer Massenträgheit relativ zur Gurtspule verdreht, wodurch die Spitze der Trägheitsklinke in Eingriff mit der Sperrverzahnung gelangt. Dadurch wird eine Drehung der Gurtspule auf die Sperrverzahnung und damit auf den Sperrring übertragen wird, der dadurch in die Blockierstellung verdreht wird. Die Gurtspule wird dann blockiert.

Die Aufgabe der Erfindung besteht darin, den bekannten Sperrmechanismus zu verbessern.

Zur Lösung dieser Aufgabe ist bei einem Gurtaufroller der eingangs genannten Art ein Mittel zum Auslösen des Verschwenkens der Trägheitsklinke vorgesehen ist, das auf das Überschreiten einer vorbestimmten Fliehkraft anspricht. Der Sperrmechanismus eines solchen Gurtaufrollers spricht nicht nur auf eine Drehbeschleunigung der Gurtspule an, sondern auch auf die Drehzahl. Hierdurch ist gewährleistet, dass die Gurtspule keine übermäßig hohen Drehzahlen erreichen kann, bevor der Sperrmechanismus die Gurtspule blockiert.

Gemäß einer ersten Variante ist vorgesehen, dass das Mittel ein Abstand zwischen der Schwenkachse der Trägheitsklinke und ihrem Massenschwerpunkt ist. Anders ausgedrückt: die Trägheitsklinke exzentrisch gelagert, so dass bei bestimmten Zuständen ein Drehmoment erzeugt werden kann, das um die Schwenkachse wirkt.

Vorzugsweise ist vorgesehen, dass der Abstand in einer Richtung verläuft, die sich von einem durch die Schwenkachse und die Rotationsachse der Gurtspule verlaufenden Radius unterscheidet. Bei dieser Anordnung des Massenschwerpunkts relativ zur Schwenkachse erzeugt die im Massenschwerpunkt wirkende Fliehkraft ein Drehmoment, das die Trägheitsklinke um die Schwenkachse zu verdrehen sucht.

Wenn der Schwerpunkt der Trägheitsklinke zwischen einem durch die Schwenkachse verlaufenden Radius und einem Radius verläuft, der durch die Rotationsachse der Gurtspule und eine einer Sperrverzahnung des Sperrsystems zugeordnete Trägheitsklinkenspitze verläuft, ist gewährleistet, dass die Trägheitsklinke in die Sperrstellung verschwenkt wird, sobald die Fliehkräfte so hoch werden, dass die Wirkung der Rückstellfeder überwunden wird.

Vorzugsweise verläuft der Abstand etwa senkrecht zu dem durch die Schwenkachse verlaufenden Radius. Bei dieser Gestaltung wird mit einem möglichst kurzen Abstand zwischen dem Massenschwerpunkt der Trägheitsklinke und ihrem Schwerpunkt ein maximales Drehmoment erzeugt.

Für den Abstand zwischen dem Massenschwerpunkt der Trägheitsklinke und ihrer Schwenkachse eignen sich Werte in der Größenordnung von 0,5 mm bis 2 mm. Besonders bevorzugt werden Werte in der Größenordnung von 0,7 bis 1,0 mm.

Gemäß der Erfindung ist vorgesehen, dass das Mittel ein Schwenkhebel ist, der auf der Außenseite der Trägheitsklinke angeordnet ist und sich an eine Sperrverzahnung des Sperrsystems anlegen kann. Der Kontaktpunkt zwischen dem Schwenkhebel und der Sperrverzahnung wirkt als Widerlager, wo dass der Schwenkhebel die Trägheitsklinke bei einer konstruktiv einstellbaren Drehzahl aus der Ausgangsstellung in die Sperrstellung "hebelt", auch wenn die Trägheitsklinke weiterhin in ihrem Massenschwerpunkt gelagert ist. Dennoch kann, wenn dies gewünscht wird, auch bei dieser Ausführungsform in derselben Weise wie bei der ersten Ausführungsform ein Abstand zwischen dem Massenschwerpunkt der Trägheitsklinke und ihrer Schwenkachse vorgesehen sein.

Gemäß einer Ausgestaltung ist der Schwenkhebel mit einem Ende an der Trägheitsklinke angebracht, während er am anderen Ende eine Hebelmasse aufweist. Hierdurch wird die Wirkung maximiert, die die Hebelmasse bei Fliehkräften auf die Trägheitsklinke ausübt. Durch die Größe der Hebelmasse kann die Drehzahl eingestellt werden, bei der der Schwenkhebel die Trägheitsklinke in die Sperrstellung verstellt.

Vorzugsweise ist der Schwenkhebel mit der Trägheitsklinke an deren von einer Trägheitsklinkenspitze abgewandten Ende verbunden. Dies führt dazu, dass die Trägheitsklinke, wenn die Hebelmasse von einer wirkenden Fliehkraft nach außen gedrückt wird und sich der Schwenkhebel an der Sperrverzahnung abstützt, aus der Ausgangsstellung in die Sperrstellung gedrückt.

Gemäß einer Ausgestaltung ist der Schwenkhebel eine Blattfeder aus Metall. Hierdurch lässt sich eine hohe Rückstellkraft für die Hebelmasse erzeugen.

Gemäß einer alternativen Ausgestaltung ist der Schwenkhebel einstückig mit der Trägheitsklinke ausgeführt. Hierdurch entfällt ein separater Montageschritt.

Die Erfindung wird nachfolgend anhand zweier Ausführungsformen beschrieben, die in den beigefügten Zeichnungen dargestellt sind. In diesen zeigen:
- Figur 1 in einer Seitenansicht einen erfindungsgemäßen Gurtaufroller gemäß einer ersten Variante, die nicht zur Erfindung gehört;
- Figur 2 eine weiter schematisierte Ansicht entsprechend Figur 1;
- Figur 3 in einer Seitenansicht einen Gurtaufroller gemäß einer Ausführungsform der Erfindung;
- Figur 4 in einer perspektivischen Ansicht eine Trägheitsklinke für einen Gurtaufroller gemäß einer Ausführungsvariante zur obigen Ausführungsform; und
- Figur 5 ein Diagramm, bei dem verschiedene Auslösezustände der Trägheitsklinke für Gurtaufroller dargestellt sind.

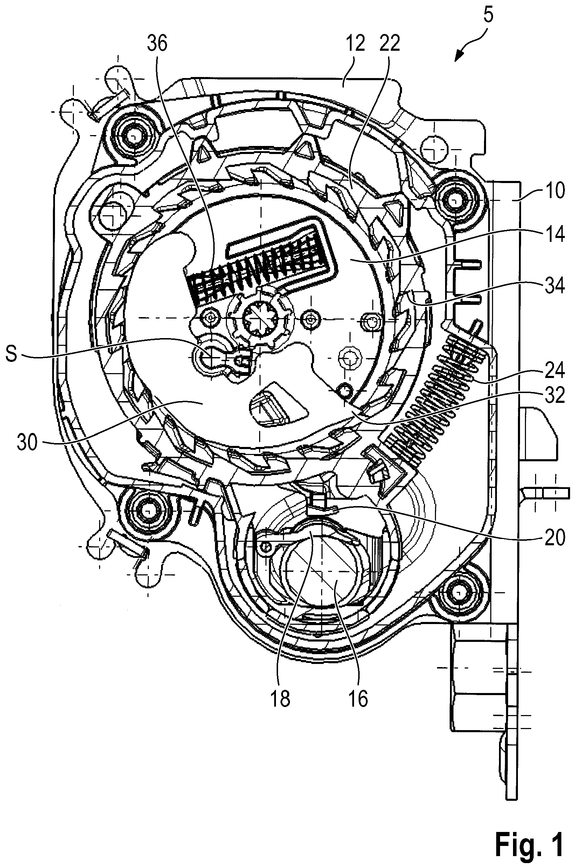

In Figur 1 ist ein Gurtaufroller 5 zu sehen, der als Teil eines Fahrzeuginsassen-Rückhaltesystems insbesondere in Kraftfahrzeugen eingesetzt werden kann.

Der Gurtaufroller weist einen Rahmen 10 auf, der zur Anbringung in einem Fahrzeug dient. Zwischen zwei Schenkeln 12 des Rahmens, von denen in Figur 1 nur einer sichtbar ist, ist eine Gurtspule 14 drehbar angebracht. Von der Gurtspule 14 ist hier nur ein Seitenflansch oder ein mit der Gurtspule verbundenes Bauteil gezeigt.

Die Gurtspule ist in sich bekannter Weise so drehbar im Rahmen 10 gelagert, dass sie im Normalzustand frei drehbar ist, wodurch ein auf ihr aufgenommener Sicherheitsgurt abgezogen werden kann. Um den Sicherheitsgurt wieder auf die Gurtspule aufzuwickeln, ist eine (hier nicht sichtbare) Rückholfeder vorgesehen.

Der Gurtaufroller ist weiterhin mit einem Blockiersystem versehen, mit dem die Gurtspule im Bedarfsfall blockiert werden kann. Dies kann gurtbandsensitiv oder fahrzeugsensitiv ausgelöst werden, wie eingangs ausführlich beschrieben ist.

Als wesentlicher Teil des fahrzeugsensitiven Blockiersystems sind hier eine Trägheitsmasse 16 und verschiedene Sperrhebel 18, 20 zu sehen.

Um eine fahrzeugsensitive Blockierung auszulösen, muss die Trägheitsmasse 16 aus einer Ausgangsstellung heraus verstellt werden. Dadurch werden die Sperrhebel 18, 20 so verstellt, dass die Gurtspule 14 mit einem Sperrring 22 gekoppelt wird. Der Sperrring 22 ist um einen vorbestimmten Winkel drehbar am Rahmen 10 angebracht. Wenn er entgegen der Wirkung einer Feder 24 aus seiner Ausgangsstellung heraus durch eine Drehung der Gurtspule 14 mitgenommen wird, resultiert dies in einer Blockierung der Gurtspule. Dies ist allgemein bekannt und wir hier nicht weiter erläutert.

Der Sperrring 22 wird auch verwendet, um eine gurtbandsensitive Blockierung der Gurtspule 14 herbeizuführen. Wesentlicher Teil des Mechanismus zur gurtbandsensitiven Blockierung ist eine Trägheitsklinke 30, die um eine Schwenkachse S schwenkbar an der Gurtspule 14 bzw. dem mit der Gurtspule 14 verbundenen Bauteil angebracht ist. Die Trägheitsklinke 30 weist an einem Ende eine Trägheitsklinkenspitze 32 auf, die in eine Sperrverzahnung 34 eingreifen kann, die auf der Innenseite des Sperrrings 22 vorgesehen ist.

Der Trägheitsklinke 30 ist eine Rückstellfeder 36 zugeordnet, die die Trägheitsklinke 30 in die in Figur 1 gezeigte Ausgangsstellung beaufschlagt. In dieser Ausgangsstellung liegt der äußerste Punkt der Trägheitsklinkenspitze 32 auf einem kleineren Radius als der innerste Punkt der Sperrverzahnung 34, sodass die Trägheitsklinke 30 und mit ihr zusammen die Gurtspule 14 frei gedreht werden können.

Wenn dagegen die Trägheitsklinke 30 aus ihrer in Figur 1 gezeigten Ausgangsstellung im Uhrzeigersinn in eine Sperrstellung verschwenkt wird, greift die Trägheitsklinkenspitze 32 in die Sperrverzahnung 34 ein, sodass die Gurtspule 14 über die Trägheitsklinke 30 mit dem Sperrring 22 gekoppelt ist. Auch in diesem Fall führt eine Drehung der Gurtspule 14 dazu, dass der Sperrring 22 entgegen der Wirkung der Feder 24 mitgenommen wird, woraus eine Blockierung der Gurtspule 14 resultiert.

Bei herkömmlichen Gurtaufrollern ist die Trägheitsklinke 30 in ihrem Massenschwerpunkt gelagert. Somit hat die Absolutdrehzahl der Gurtspule keinerlei Einfluss auf das Sperrverhalten der Trägheitsklinke 30; allein die Höhe der Drehbeschleunigung der Gurtspule ist dafür entscheidend, ob aus dem Massenträgheitsmoment der Trägheitsklinke ein Drehmoment resultiert, unter dessen Wirkung die Kraft der Rückstellfeder 36 überwunden werden kann.

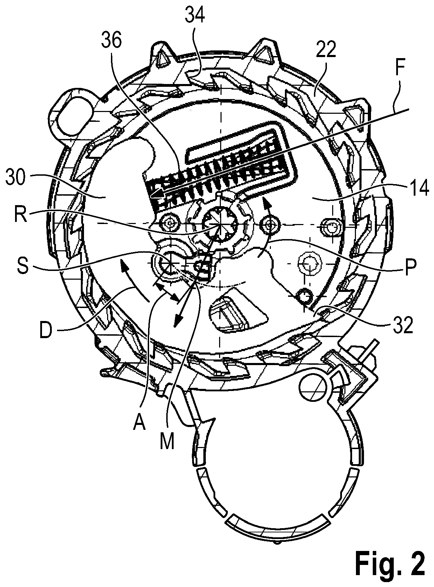

Gemäß der ersten Variante ist jedoch vorgesehen, dass der Massenschwerpunkt M der Trägheitsklinke 30 relativ zur Schwenkachse S versetzt ist, und zwar um einen Abstand A (siehe Figur 2). Der Abstand A liegt dabei etwa senkrecht zu einem Radius, der durch die Rotationsachse R der Gurtspule 14 und der Schwenkachse S der Trägheitsklinke 30 verläuft.

Wenn die Gurtspule und damit die Trägheitsklinke 30 in der Richtung des Pfeils P gedreht werden, ergibt sich, falls diese Drehung beschleunigt erfolgt, ein aus der Massenträgheit der Trägheitsklinke 30 resultierendes Drehmoment D, welches entgegen der Kraft F der Rückstellfeder 36 wirkt. Hinzu kommt, dass die im Massenschwerpunkt M der Trägheitsklinke 30 wirkende Fliehkraft ein Drehmoment um die Schwenkachse S erzeugt, das sich zusammensetzt aus der Fliehkraft und dem Hebelarm A. Dieses Drehmoment wirkt in derselben Richtung wie das Drehmoment, das im Falle einer Drehbeschleunigung der Gurtspule beim Gurtbandabzug wirkt.

Hieraus folgt, dass zwei Parameter entscheidend sind, um die Trägheitsklinke 30 aus ihrer Ausgangsstellung in die Sperrstellung zu bewegen. Zunächst kann der Fall betrachtet werden, dass die Gurtspule 14 mit einer starken Winkelbeschleunigung gedreht wird, während die Absolutdrehzahl weiterhin relativ niedrig ist. In diesem Fall ist (fast ausschließlich) die Drehbeschleunigung dafür ausschlaggebend, dass die Trägheitsklinke 30 die Blockierung auslöst.

Es kann auch der Fall betrachtet werden, dass die Gurtspule mit vergleichsweise geringer Drehbeschleunigung gedreht wird, jedoch die Absolutdrehzahl mit der Zeit eine beachtliche Höhe erreicht. In diesem Fall ist es (fast ausschließlich) die auf die Trägheitsklinke 30 wirkende Zentrifugalkraft, die dafür sorgt, dass die Kraft der Rückstellfeder 36 überwunden wird.

Schließlich sind Mischzustände möglich, bei denen die Kombination aus der bei einer bestimmten Drehzahl wirkenden Fliehkraft und dem einer Drehbeschleunigung entgegenwirkenden Massenträgheitsmoment dazu kommt, dass das insgesamt auf die Trägheitsklinke 30 wirkende Drehmoment D die Kraft F der Rückstellfeder 36 überwinden kann.

Bei dieser ersten Variante gibt es noch einen gewissen Einfluss der Schwerkraft dahingehend, dass je nach Position der Trägheitsklinke der Massenschwerpunkt M ein der Kraft F entgegenwirkendes oder die Kraft F unterstützendes Drehmoment erzeugt. Dieser Einfluss ist jedoch vernachlässigbar gegenüber den Wirkungen einer hohen Drehbeschleunigung und einer hohen Drehzahl, sodass dies hier nicht weiter berücksichtigt wird.

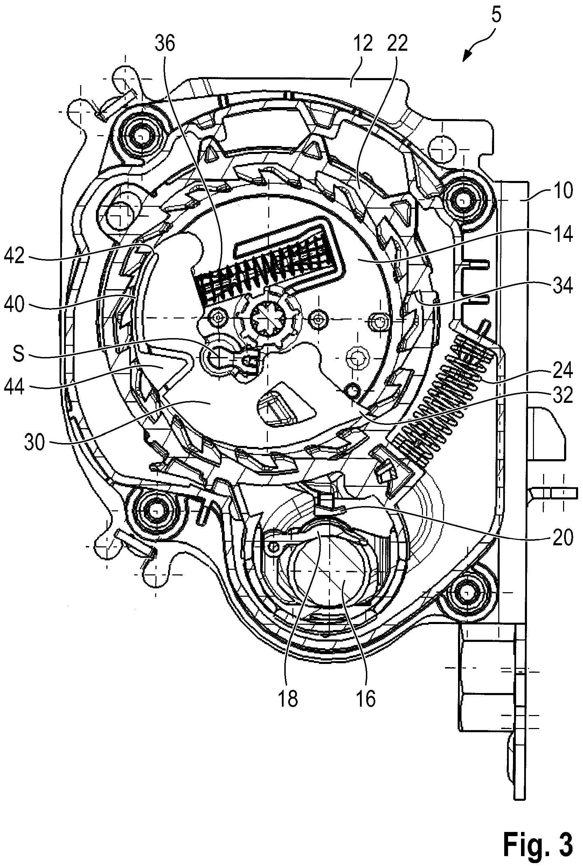

In Figur 3 ist eine Ausführungsform eines erfindungsgemäßen Gurtaufrollers gezeigt. Für die von der vorhergehenden Ausführungsform bekannten Bauteile werden dieselben Bezugszeichen verwendet, und es wird insoweit auf die obigen Erläuterungen verwiesen.

Der wesentliche Unterschied zwischen dieser Ausführungsform und der ersten Variante besteht darin, dass bei dieser Ausführungsform ein Schwenkhebel 40 vorgesehen ist, der an einem Ende 42 mit der Trägheitsklinke 30 verbunden ist, und zwar auf deren von der Trägheitsklinkenspitze 32 abgewandten Ende. Am anderen Enden des Schwenkhebels 40 ist eine Hebelmasse 44 vorgesehen.

Der Schwenkhebel 40 zusammen mit der Hebelmasse 44 sind hier einstückig zusammen mit dem Rest der Trägheitsklinke 30 ausgeführt. Die Trägheitsklinke kann beispielsweise zusammen mit dem Schwenkhebel 40 und der Hebelmasse 44 spritzgegossen sein.

Der Schwenkhebel 40 ist nach Art einer Feder ausgeführt und hält die Hebelmasse 44, wenn keine äußeren Kräfte wirken, in der in Figur 3 gezeigten Position. Wenn die Gurtspule 14 gedreht wird, wirken auf die Hebelmasse 44 Fliehkräfte, sodass die Hebelmasse 44 nach außen gedrängt wird. Dadurch legt sich der Schwenkhebel 40 an die Sperrverzahnung 34 an. Dabei wird aufgrund der fortgesetzten Relativdrehung zwischen der Gurtspule 14 und damit auch des Schwenkhebels 40 relativ zur Sperrverzahnung 34 zu einem bestimmten Zeitpunkt die Situation erhalten, dass die Hebelmasse 44 den Schwenkhebel 40 nach außen zu drücken versucht, während dieser sich an der Spitze eines Zahns der Sperrverzahnung 34 abstützt. Hieraus resultiert, dass das der Hebelmasse 44 entgegengesetzte Ende 42 des Schwenkhebels 40 radial nach innen gedrückt wird. Dies wird auf die Trägheitsklinke 30 übertragen, die dadurch entgegen der Wirkung der Rückstellfeder 36 aus ihrer in Figur 3 gezeigten Ausgangsstellung in die Sperrstellung verstellt wird. Die Gurtspule 14 ist dadurch mit dem Sperrring 22 gekoppelt.

In der gleichen Weise wie bei der ersten Variante führt auch bei dieser Ausführungsform die Drehgeschwindigkeit der Gurtspule 14 zu einer Fliehkraft, die letztendlich ein der Wirkung der Rückstellfeder 36 entgegenwirkendes Drehmoment erzeugt. Somit kann die gurtbandsensitive Sperrung ausgelöst werden im Wesentlichen durch Überschreiten einer Drehbeschleunigung der Gurtspule, im Wesentlichen durch Überschreiten einer Grenzdrehzahl der Gurtspule oder durch eine Mischung aus Drehzahl der Gurtspule und Drehbeschleunigung der Gurtspule.

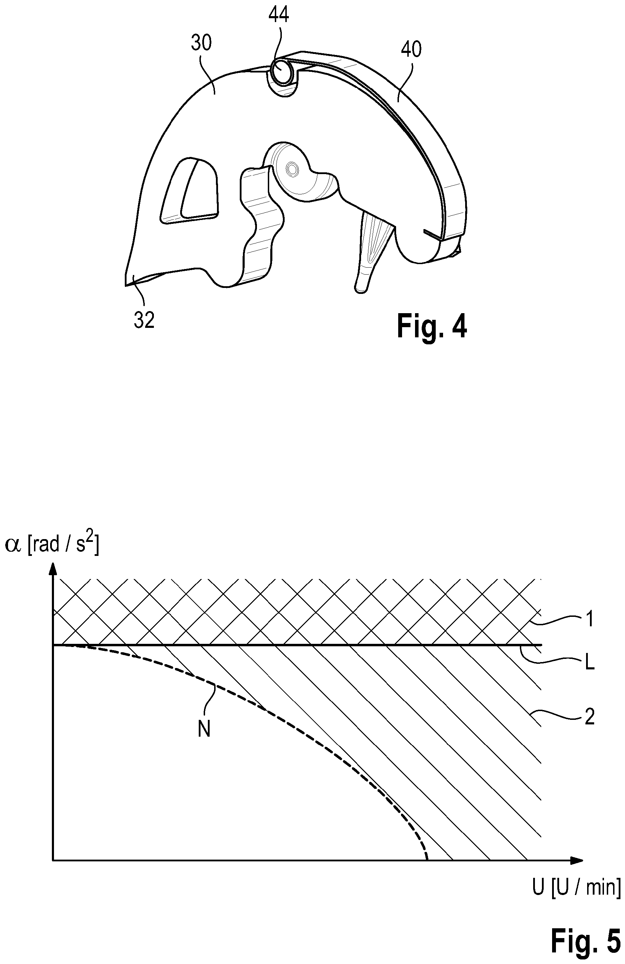

In Figur 4 ist eine Variante zur obigen Ausführungsform gezeigt. Der Unterschied zur Ausführungsform gemäß Figur 3 besteht darin, dass bei der Variante gemäß Figur 4 der Schwenkhebel 40 nicht einstückig mit der Trägheitsklinke 30 ausgeführt ist, sondern als separates Bauteil. Der Schwenkhebel 40 ist insbesondere als Blattfeder ausgeführt, die in die Trägheitsklinke 30 an deren von der Trägheitsklinkenspitze 32 abgewandten Ende eingehängt ist und am entgegengesetzten Ende die Hebelmasse 44 trägt.

In Figur 5 sind schematisch die Parameter für eine gurtbandsensitive Blockierung der Gurtspule 14 dargestellt. Die Linie L zeigt die Auslösung bei einem Gurtaufroller aus dem Stand der Technik. Es ist allein die Drehbeschleunigung maßgebend dafür, ob sich der Gurtaufroller im gestärkten Zustand (rechtsschraffierter Bereich 1) befindet oder ungesperrt ist (Bereich unterhalb der Linie L).

Die Linie N zeigt die sogenannte Sperrgrenze für einen Gurtaufroller nach der ersten Variante. Oberhalb der Linie N (linksschraffierter Bereich 2) wurde die gurtbandsensitive Sperrung ausgelöst, und unterhalb der Linie N wurde die Trägheitsklinke 30 nicht aktiviert.

Im linken Bereich der Kurve N wird eine gurtbandsensitive Blockierung (fast) allein aufgrund einer hohen Drehbeschleunigung der Gurtspule ausgelöst. In diesem Bereich ist das Ansprechverhalten der gurtbandsensitiven Blockierung vergleichbar mit demjenigen eines Gurtaufrollers aus dem Stand der Technik.

Am rechten Ende der Kurve N wird die gurtbandsensitive Blockierung (fast) allein aufgrund einer hohen Drehzahl der Gurtspule 14 ausgelöst; die Drehbeschleunigung ist hier fast vernachlässigbar. Dies ermöglicht es, die im Betrieb auftretende maximale Drehzahl der Gurtspule konstruktiv zu begrenzen, beispielsweise auf einen Wert in der Größenordnung von 2000 Umdrehungen pro Minute.

In dem zwischen den beiden Enden der Kurve N liegenden Bereich wird die gurtbandsensitive Blockierung durch eine Überlagerung der Auswirkung der Drehbeschleunigung der Gurtspule und der Auswirkung der absoluten Drehzahl der Gurtspule ausgelöst. Der Verlauf der Kurve N kann dabei eingestellt werden durch die Größe des Abstandes A bei der ersten Variante und die Federsteifigkeit des Schwenkhebels 40 im Verhältnis zur Hebelmasse 44.

Bei erfindungsgemäßen Gurtaufrollern nach der obigen Ausführungsform bewegt sich die Hebelmasse 44 aufgrund der Fliehkraft drehzahlabhängig nach außen. Bei Erreichen bzw. Überschreiten einer Grenzdrehzahl kommt die Hebelmasse 44 mit der Sperrverzahnung 34 in Kontakt, so dass es in Folge zur Auslenkung der Trägheitsklinke (30) kommt.

## Patentansprüche

1. Gurtaufroller (5) für ein Fahrzeug-Sicherheitsgurtsystem, mit einem Rahmen (10), einer Gurtspule (14), die drehbar im Rahmen (10) angebracht ist, und einem Sperrsystem, das die Gurtspule gurtbandsensitiv sperren kann, wobei das Sperrsystem eine Trägheitsklinke (30) aufweist, die an sich zusammen mit der Gurtspule (14) dreht und aus einer Ausgangsstellung, in der die Gurtspule frei drehbar ist, um eine Schwenkachse (S) in eine Sperrstellung verschwenkbar ist, wobei ein Mittel zum Auslösen des Verschwenkens der Trägheitsklinke (30) vorgesehen ist, das auf das Überschreiten einer vorbestimmten Fliehkraft anspricht, **dadurch gekennzeichnet, dass** das Mittel ein Schwenkhebel (40) ist, der auf der Außenseite der Trägheitsklinke (30) angeordnet ist und sich an eine Sperrverzahnung (34) des Sperrsystems anlegen kann.

2. Gurtaufroller (5) nach Anspruch 1, **dadurch gekennzeichnet, dass** der Schwenkhebel (40) mit einem Ende an der Trägheitsklinke (30) angebracht ist und am anderen Ende eine Hebelmasse (44) aufweist.

3. Gurtaufroller (5) nach einem der Ansprüche 1 und 2, **dadurch gekennzeichnet, dass** der Schwenkhebel (40) mit der Trägheitsklinke (30) an deren von einer Trägheitsklinkenspitze (32) abgewandten Ende verbunden ist.

4. Gurtaufroller (5) nach einem der Ansprüche 1 bis 3, **dadurch gekennzeichnet, dass** der Schwenkhebel (40) eine Blattfeder aus Metall ist.

5. Gurtaufroller (5) nach einem der Ansprüche 1 bis 3, **dadurch gekennzeichnet, dass** der Schwenkhebel (40) einstückig mit der Trägheitsklinke (30) ausgeführt ist.

## Claims

1. A belt retractor (5) for a vehicle seat belt system comprising a frame (10), a belt reel (14) which is rotatably arranged in the frame (10) and a locking system which can lock the belt reel in a webbing-sensitive manner, the locking system including an inertia pawl (30) which per se co-rotates with the belt reel (14) and is pivotable from a home position in which the belt reel is freely rotatable about a pivot axis (S) into a locking position, wherein a means to trigger pivoting of the inertia pawl (30) is provided which is responsive to exceeding a predetermined centrifugal force, **characterized in that** the means is a pivoted lever (40) which is arranged on the outside of the inertia pawl (30) and is adapted to contact locking teeth (34) of the locking system.

2. The belt retractor (5) according to claim 1, **characterized in that** the pivoted lever (40) is arranged by one end on the inertia pawl (30) and at the other end includes a leverage mass (44).

3. The belt retractor (5) according any one of the claims 1 and 2, **characterized in that** the pivoted lever (40) is connected to the inertia pawl (30) at the end thereof facing away from an inertia pawl tip (32).

4. The belt retractor (5) according to any one of the claims 1 to 3, **characterized in that** the pivoted lever (40) is a leaf spring made from metal.

5. The belt retractor (5) according to any one of the claims 1 to 3, **characterized in that** the pivoted lever (40) is formed integrally with the inertia pawl (30).

## Revendications

1. Enrouleur de ceinture (5) pour un système de ceinture de sécurité de véhicule, comprenant un châssis (10), une bobine de ceinture (14) montée libre en rotation dans le châssis (10), et un système de verrouillage capable de verrouiller la bobine de ceinture d'une manière sensible à la sangle de ceinture, pour lequel le système de verrouillage comprend un cliquet d'inertie (30), lequel tourne sur lui-même en même temps que la bobine de ceinture (14) et qui peut pivoter autour d'un axe de pivotement (S) à partir d'une position initiale, dans laquelle la bobine de ceinture peut tourner librement, à une position de verrouillage, pour lequel un moyen est prévu pour déclencher le pivotement du cliquet d'inertie (30), lequel moyen réagit au dépassement d'une force centrifuge prédéterminée, **caractérisé en ce que** le moyen est un levier pivotant (40), lequel est disposé sur le côté extérieur du cliquet d'inertie (30) et peut s'appuyer contre une denture de verrouillage (34) du système de verrouillage.

2. Enrouleur de ceinture (5) selon la revendication 1, **caractérisé en ce que** le levier pivotant (40) a une extrémité fixée au cliquet d'inertie (30) et a une masse de levier (44) à l'autre extrémité.

3. Enrouleur de ceinture (5) selon l'une quelconque des revendications 1 et 2, **caractérisé en ce que** le levier pivotant (40) est relié au cliquet d'inertie (30) à son extrémité opposée à une pointe du cliquet d'inertie (32).

4. Enrouleur de ceinture (5) selon l'une quelconque des revendications 1 à 3, **caractérisé en ce que** le levier pivotant (40) est un ressort à lame en métal.

5. Enrouleur de ceinture (5) selon l'une quelconque des revendications 1 à 3, **caractérisé en ce que** le levier pivotant (40) est rendu solidaire du cliquet d'inertie (30).
